# EUROPÄISCHE PATENTSCHRIFT

(11) **EP 0 860 633 B1**
(45) Veröffentlichungstag und Bekanntmachung des Hinweises auf die Patenterteilung: **04.08.1999**
(21) Anmeldenummer: 98102319.5
(22) Anmeldetag: 11.02.1998
(51) Int. Cl.: F16H 61/14

(54) **Verfahren zur Regelung einer Wandlerkupplung bei einem Anfahrvorgang**
Method of controlling a torque converter lockup clutch during vehicle startoff
Méthode de commande d'un embrayage de pontage de convertisseur de couple pendant le démarrage de véhicule

(30) Priorität: 17.02.1997 DE 19705956
(43) Veröffentlichungstag der Anmeldung: 26.08.1998
(73) Patentinhaber: ZF FRIEDRICHSHAFEN Aktiengesellschaft, 88038 Friedrichshafen (DE)
(72) Erfinder: Zeller, Heinrich, 88048 Friedrichshafen (DE); Jauch, Friedemann, Dr., 88074 Mackenbeuren (DE)

(56) Entgegenhaltungen:
- EP-A- 0 760 443
- US-A- 4 700 819
- US-A- 5 637 052
- AUTOMOBILTECHNISCHE ZEITSCHRIFT ATZ, Bd. 96, Nr. 11, November 1994, STUTTGART, DE, Seiten 690-697, XP000478695

## Beschreibung

Die Erfindung betrifft ein Verfahren zur Regelung einer Wandlerkupplung, insbesondere einer geregelten Wandlerüberbrückungskupplung (GWK), eines Automatgetriebes bei einem Anfahrvorgang eines Fahrzeuges mittels eines elektronischen Getriebesteuergerätes (EGS) mit Berechnungseinheit und eines elektrischen Druckstellers (EDS).

Aus der Praxis sind für Kraftfahrzeuge mit Automatgetrieben Wandlerüberbrückungskupplungen bekannt, die im geöffneten oder aktivierten Zustand betrieben werden können. Der aktivierte Zustand umfaßt hierbei den geregeltschlupfenden und geschlossenen Zustand.

Eine derartige Wandlerüberbrückungskupplung ist beispielsweise in der ATZ Automobiltechnische Zeitschrift 96 (1994) 11 beschrieben. Wichtigste Eingangsgrößen für den Regler dieser bekannten Wandlerüberbrückungskupplung sind Motordrehzahl und die Turbinendrehzahl. Durch Subtraktion dieser beiden Eingangsgrößen wird ein Wandlerschlupf als Regelgröße berechnet. Die Führungsgröße WK-Sollschlupf ist in einem Kennfeld in einem elektronischen Getriebesteuergerät (EGS) abgelegt.

Als Stellglied für die Druckansteuerung dieser Wandlerüberbrückungskupplung dient ein elektrischer Drucksteller (EDS), der vom elektronischen Getriebesteuergerät (EGS) über eine stromgeregelte Endstufe angesteuert wird. Der EDS wandelt den vorgegebenen Steuerstrom entsprechend seiner Kennlinien in einen proportionalen Hydraulikdruck um. Durch diesen EDS-Druck werden z. B. bei einem 2-Leitungswandler mit zwei Steuerventilen sowohl der Wandlerdruck, der auf der Rückseite des Wandlerkupplungskolbens wirkt, als auch der Wandlerkupplungsdruck, der den Wandlerkupplungskolben schließt, gesteuert.

Die Wandlerüberbrückungskupplung wird als "offen" bzw. "deaktiviert" bezeichnet, wenn kein Moment über die Wandlerüberbrückungskupplung übertragen wird. Dagegen wird im "aktivierten" Zustand der Kolben der Wandlerüberbrückungskupplung mit Druck beaufschlagt, wobei über die resultierende Kolbenkraft eine oder mehrere Reiblamelle(n) angepreßt und ein entsprechendes Übertragungsmoment erzeugt wird.

Neben den üblichen Steuerungsfunktionen weist diese Wandlerüberbrückungskupplung verschiedene Sonderfunktionen auf, um das Verhalten zu optimieren.

So ist ein Verfahren bekannt, gemäß dem die Wandlerüberbrückungskupplung unterhalb einer Grenztemperatur immer geöffnet ist und bei dem während des Warmlaufs der Sollschlupf im Vergleich zum Normalbetrieb angehoben wird.

Durch ein anderes Steuerungsverfahren wird der Betrieb der Wandlerüberbrückungskupplung bei sehr hohen Getriebetemperaturen unterbunden, um die Reibflächen vor Überhitzung zu schützen.

Des weiteren ist ein Verfahren zur Schnellfüllung bekannt, bei dem der Kolben der Wandlerüberbrückungskupplung beim Übergang vom offenen in den geregelten Zustand schnell in die Regelposition gefahren wird.

Durch ein weiteres Schaltverfahren bleibt der Betrieb der Wandlerüberbrückungskupplung auch während einer Schaltung erhalten, um ein Hochdrehen des Motors zu vermeiden, wobei der Sollschlupf während einer Schaltung angehoben wird.

Dennoch bleibt die Regelung der Wandlerüberbrückungskupplung bei bestimmten Fahrsituationen problematisch.

Eine derartige Fahrsituation stellt der Anfahrvorgang eines Fahrzeuges mit einem Automatikgetriebe dar, bei dem ein "weicher" hydrodynamischer Wandler eingesetzt wird.

Bei den aus dem Stand der Technik bekannten geregelten Wandlerkupplungen ist es erst ab einer Fahrzeuggeschwindigkeit von etwa 20 km/h möglich, mit einer Wandlerüberbrükkungskupplung im geregelten Zustand zu fahren. Bei Langsamfahrt bzw. einem Anfahrvorgang im Bereich zwischen 0 km/h bis annähernd 20 km/h muß dagegen die Wandlerüberbrückungskupplung deaktiviert bzw. offen sein.

Beim Anfahren mit offener Wandlerkupplung und der bisher bekannten, anschließenden WK-Aktivierung tritt nachteilhafterweise eine Überhöhung der Motordrehzahl auf, welche von den Fahrzeuginsassen als störend empfunden wird, wenn von einem Fahrzeugführer nicht ausdrücklich ein "sportliches" Anfahren mit entsprechendem Hochtouren des Motors gewünscht wird.

Es ist daher Aufgabe der vorliegenden Erfindung, ein Verfahren bereit zu stellen, mit der eine geregelte Wandlerkupplung im gesamten Fahrbereich, insbesondere bei einem Anfahrvorgang ab 0 km/h, im aktivierten bzw. geregelten Zustand betrieben werden kann.

Diese Aufgabe wird durch die im kennzeichnenden Teil des Anspruches 1 aufgeführten Verfahrensschritte gelöst.

Das erfindungsgemäße Verfahren bietet den Vorteil, daß eine geregelte Wandlerkupplung im gesamten Fahrbereich von 0 km/h bis zur Höchstgeschwindigkeit eines Fahrzeuges bei normalen Fahrbedingungen in aktiviertem Zustand betrieben werden kann, insbesondere auch im Anfahrbereich, welcher bisher nur über den hydrodynamischen Wandler bei offener Wandlerkupplung zu durchfahren war.

Indem für die Schlupfbeeinflussung beim Anfahren eigene Regelparameter und ein eigenes Sollschlupf-Kennfeld verwendet werden, welches nunmehr von der Turbinendrehzahl n_T und dem Motor-Drehmoment T_Mot abhängig ist, wird vorteilhafterweise bei einem üblichen Anfahrvorgang, d. h. bei einem mittleren Drosselklappenwinkel-Bereich, ein übermäßiges Auftouren des Motors beim Anfahren mit weichem Wandler, der sogenannte "Gummiband-Effekt", verhindert.

Mit den eigenen Regelparametern für den Anfahrbereich kann vorteilhafterweise ein hoher Wandler-Sollschlupf eingestellt werden, durch den der Motor unmittelbar beim Anfahren "gedrückt" wird.

Des weiteren bietet die Erfindung den Vorteil, daß durch die Vorgabe von bestimmten Startkriterien der Anfahrvorgang auch ohne geregelte Wandlerkupplung bzw. in einem offenen GWK-Zustand durchgeführt werden kann, wenn z. B. vom Fahrzeugführer ein Hochtouren des Motors beim Anfahren beabsichtigt wird.

Damit deckt die Schlupfbeeinflussung beim Anfahren gemäß der vorliegenden Erfindung das Anfahrverhalten eines durchschnittlichen Fahrer ab, während für ein extrem sportliches Anfahren die geregelte Wandlerkupplung in einen geöffneten Zustand geschaltet werden kann.

Weitere Vorteile der Erfindung ergeben sich aus den Unteransprüchen und der nachfolgenden, auf die prinzipmäßige Zeichnung Bezug nehmenden Beschreibung der Erfindung.

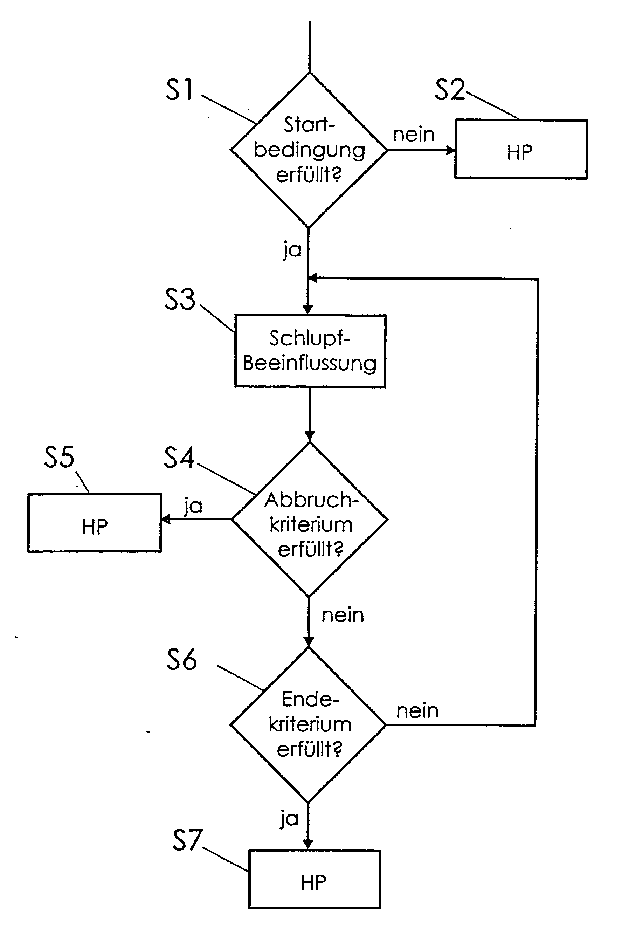

Die einzige Figur zeigt ein Flußdiagramm eines Verfahrens zur Regelung einer geregelten Wandlerüberbrückungskupplung (GWK) eines Automatgetriebes bei einem Anfahrvorgang eines Fahrzeuges.

Bezug nehmend auf die Figur ist ein Verfahrensablaufplan für ein Unterprogramm zur Anfahrregelung eines Fahrzeuges mittels einer geregelten Wandlerkupplung (GWK) bei einem Automatgetriebes eines Fahrzeuges dargestellt. Mit diesem Verfahren soll das Standard-Anfahren mit aktivierter Wandlerüberbrückungskupplung abgedeckt werden.

Die Abarbeitung dieses Unterprogramms kann durch höher priorisierte Tasks jederzeit unterbrochen werden. Sie wird dann an gleicher Stelle fortgesetzt.

Zu Beginn wird in einer ersten Unterscheidungsfunktion S1 geprüft, ob ein Anfahrgang, z. B. der erste Gang, geschaltet ist und eine zusätzliche, vordefinierte Startbedingung erfüllt ist.

Die Startbedingung, welche zusätzlich zur Schaltung des Anfahrganges erfüllt sein muß, wird in der Unterscheidungsfunktion S1 beispielsweise als erfüllt erkannt, wenn die Bremse nicht aktiviert ist.

Als weiteres Startkriterium kann ein Drosselklappenwinkel Dki gewählt werden, welcher größer als ein minimaler Drosselklappenwinkel Dki_min und kleiner als ein maximaler Drosselklappenwinkel Dki_max sein muß. Wenn ein bestimmter Drosselklappenwinkel-Bereich als Startkriterium gewählt wird, kann die Anwendung des Verfahrens zur Anfahrregelung auf einen bestimmten Fahrertyp, in der Regel einem Durchschnittsfahrer, begrenzt werden, so daß sportliche Fahrer mit deaktivierter Wandlerkupplung anfahren können.

Eine weitere vorgebbare Startbedingung stellt ein Grenzwert GW_1 einer Motordrehzahl n_Mot dar. Ebenso ist als Startbedingung ein Drosselklappenwinkel-Gradient Dki_gradient vorgebbar, welcher kleiner als ein Grenzwert GW_2 sein muß.

Als Alternative kann die Startbedingung auch in Abhängigkeit von der Öltemperatur ϑ_Öl vordefiniert werden, wobei zur Aktivierung der geregelten Wandlerüberbrückungskupplung neben der Schaltung des Anfahrganges der Wert der Öltemperatur ϑ_Öl größer als ein minimaler Grenzwert GW_3 und/oder kleiner als ein maximaler Grenzwert GW_4 sein muß. Als Startkriterium ist des weiteren die Feststellung einer Höhenerkennung, (X [m] über NN) vorgebbar.

Des weiteren ist als zusätzliche Startbedingung für die Unterscheidungsfunktion S1 vordefinierbar, daß eine Sperrzeit T_sperr_1 seit einer letzten Aktivierung einer Sollschlupfbeeinflussung beim Anfahren abgelaufen ist und/oder eine Sperrzeit T_sperr_2 seit einem letzten Überschreiten eines Grenzwertes GW_5 für eine zulässige Verlustenergiemenge E_Verlust abgelaufen ist.

Wenn in der ersten Unterscheidungsfunktion S1 festgestellt wird, daß kein Anfahrgang geschaltet ist oder eine zusätzliche, vordefinierte Startbedingung, wie sie oben beschrieben wurden, nicht erfüllt ist, wird von der Unterscheidungsfunktion S1 eine Verarbeitungsfunktion S2 zur Rückkehr in ein Hauptprogramm aktiviert.

Liefert die Unterscheidungsfunktion S1 das Ergebnis, daß der Anfahrgang geschaltet ist und die vordefinierte Startbedingung bzw. wenigstens eine von mehreren vordefinierten Startbedingungen erfüllt ist, wird von der Unterscheidungsfunktion S1 eine Verarbeitungsfunktion S3 zur Sollschlupfbeeinflussung beim Anfahren gestartet.

Bei der Sollschlupfbeeinflussung während eines Anfahrvorganges werden ein vergleichsweise hoher Sollschlupf dn_soll aus einem eigenen Sollschlupf-Kennfeld für den Anfahrvorgang sowie eigene Regelparameter verwendet. Der Sollschlupf dn_soll wird hierfür über ein Kennfeld als Funktion von Turbinendrehzahl n_T und Motordrehmoment T_Mot vorgegeben. Alternativ hierzu kann der Sollschlupf dn_soll für den Anfahrvorgang auch in einem Kennfeld, welches die Abhängigkeit zwischen Sollschlupf dn_soll, Turbinendrehzahl n_T und Drosselklappenwinkel Dki bestimmt, abgelegt sein.

Die Verarbeitungsfunktion S3 zur Sollschlupfbeeinflussung beim Anfahren wird solange abgearbeitet, bis die Funktion als abgebrochen oder beendet erkannt wird.

Hierzu wird in einer nachgeordneten Unterscheidungsfunktion S4 geprüft, ob ein vorgegebenes Abbruchkriterium erfüllt ist. Die Sollschlupfbeeinflussung beim Anfahren wird z. B. abgebrochen, wenn eine während der aktivierten Funktion aufgetretene Verlustenergiemenge E_Verlust größer als ein vorgegebener Grenzwert GW_6 ist oder ein Wert der Öltemperatur ϑ_Öl größer als ein maximaler Grenzwert GW_7 zuzüglich eines Hysteresewertes ist. Alternativ hierzu kann vorgegeben werden, daß die Verarbeitungsfunktion S3 zur Sollschlupfbeeinflussung beim Anfahren abgebrochen wird, wenn ein aktivierter Zustand der Bremse erkannt wird oder der Drosselklappenwinkel Dki größer als ein maximaler Drosselklappenwinkel Dki_max zuzüglich eines Hysteresewertes ist oder der Drosselklappenwinkel Dki kleiner als ein minimaler Drosselklappenwinkel Dki_min abzüglich eines Hysteresewertes ist.

Wenn eines dieser Abbruchkriterien in der Unterscheidungsfunktion S4 als erfüllt erkannt wird, aktiviert die Unterscheidungsfunktion S4 eine Verarbeitungsfunktion S5 zur Rückkehr in das Hauptprogramm. Wenn kein Abbruchkriterium in der Unterscheidungsfunktion S4 als erfüllt erkannt wird, wird in einer nachgeordneten Unterscheidungsfunktion S6 geprüft, ob ein vordefiniertes Endekriterium zur Beendigung der Verarbeitungsfunktion S3 zur Sollschlupfbeeinflussung beim Anfahren erfüllt ist.

Als Endekriterium dient dabei ein Signal "Normalbetrieb" für die Wandlerkupplung GWK, d. h. wenn ein Übergang von dem Anfahrzustand in den normalen geregelten Zustand der Wandlerkupplung angefordert wird. Alternativ hierzu kann als Endekriterium vorgegeben werden, daß in der Unterscheidungsfunktion S6 ein Signal zur Schaltung in einen nächsten Gang erkannt werden muß.

Wenn in der Unterscheidungsfunktion S6 kein Endekriterium erkannt wird, wird in die Verarbeitungsfunktion S3 zur Sollschlupfbeeinflussung beim Anfahren zurückverzweigt. Liefert die Unterscheidungsfunktion S6 dagegen das Ergebnis, daß die vorgegebene Endebedingung(en) erfüllt ist, so wird eine Verarbeitungsfunktion S7 zur Rückkehr ins Hauptprogramm gestartet.

### Bezugszeichen

- Dki: Drosselklappenwinkel
- Dki_gradient: Drosselklappenwinkel-Gradient
- Dki_max: maximaler Drosselklappenwinkel
- Dki_min: minimaler Drosselklappenwinkel
- dn_soll: Sollschlupf
- E_Verlust: Verlustenergiemenge
- GW_1: Grenzwert
- GW_2: Grenzwert
- GW_3: Grenzwert
- GW_4: Grenzwert
- GW_5: Grenzwert
- GW_6: Grenzwert
- GW_7: Grenzwert
- GWK: geregelte Wandlerüberbrückungskupplung
- n_Mot: Motordrehzahl
- n_T: Turbinendrehzahl
- S1: Unterscheidungsfunktion
- S2: Verarbeitungsfunktion
- S3: Verarbeitungsfunktion
- S4: Unterscheidungsfunktion
- S5: Verarbeitungsfunktion
- S6: Unterscheidungsfunktion
- S7: Verarbeitungsfunktion
- ϑ_Öl: Öltemperatur
- T_Mot: Motordrehmoment
- T_sperr_1: Sperrzeit seit einer letzen Aktivierung der Sollschlupfbeeinflussung
- T_sperr_2: Sperrzeit seit einem letzten Überschreiten einer zulässigen Verlustenergiemenge

## Patentansprüche

1. Verfahren zur Regelung einer Wandlerkupplung, insbesondere einer geregelten Wandlerüberbrückungskupplung (GWK), eines Automatgetriebes bei einem Anfahrvorgang eines Fahrzeuges mittels eines elektronischen Getriebesteuergerätes (EGS) mit Berechnungseinheit und eines elektrischen Druckstellers (EDS), dadurch **gekennzeichnet**, daß eine Verarbeitungsfunktion (S3) zur Schlupfbeeinflussung beim Anfahren gestartet wird, wenn in einer ersten Unterscheidungsfunktion (S1) festgestellt wird, daß ein Anfahrgang geschaltet ist und eine zusätzliche, vordefinierte Startbedingung erfüllt ist, wobei zur Schlupfbeeinflussung eigene Regelparameter und ein eigenes Sollschlupf-Kennfeld, welches die Abhängigkeit zwischen Sollschlupf (dn_soll), Turbinendrehzahl (n_T) und Motor-Drehmoment (T_Mot) bestimmt, verwendet werden und die Verarbeitungsfunktion (S3) solange abgearbeitet wird, bis in einer Unterscheidungsfunktion (S4) festgestellt wird, daß ein vorgebbares Abbruchkriterium erfüllt ist, oder in einer nachgeordneten Unterscheidungsfunktion (S6) festgestellt wird, daß ein vorgebbares Endekriterium erfüllt ist.

2. Verfahren nach Anspruch 1, dadurch **gekennzeichnet,** daß in der Unterscheidungsfunktion (S1) die zusätzliche Startbedingung als erfüllt erkannt wird, wenn
a) ein nicht-aktivierter Zustand der Bremse erkannt wird, und/oder
b) ein Drosselklappenwinkel (Dki) größer als ein minimaler Drosselklappenwinkel (Dki_min) und kleiner als ein maximaler Drosselklappenwinkel (Dki_max) ist, und/oder
c) eine Motordrehzahl (n Mot) kleiner als ein Grenzwert (GW_1) ist, und/oder
d) ein Drosselklappenwinkel-Gradient (Dki_gradient) kleiner als ein Grenzwert (GW_2) ist, und/oder
e) ein Wert der Öltemperatur (ϑ_Öl) größer als ein minimaler Grenzwert (GW_3) ist, und/oder
f) der Wert der Öltemperatur (ϑ_Öl) kleiner als ein maximaler Grenzwert (GW_4) ist, und/oder
g) eine Sperrzeit (T_sperr_1) seit einer letzten Aktivierung der Verarbeitungsfunktion (S3) zur Schlupfbeeinflussung abgelaufen ist, und/oder
h) eine Sperrzeit (T_sperr_2) seit einem letzten Überschreiten eines Grenzwertes (GW_5) für eine zulässige Verlustenergiemenge (E_verlust) abgelaufen ist, und/oder
i) keine Höhenerkennung (x [m] über NN) festgestellt wird.

3. Verfahren nach Anspruch 1 oder 2, dadurch **gekennzeichnet,** daß in der Unterscheidungsfunktion (S4) das Abbruchkriterium als erfüllt erkannt wird, wenn
a) eine Verlustenergiemenge (E Verlust) größer als ein vorgegebener Grenzwert (GW_6) ist, oder
b) ein Wert der Öltemperatur (ϑ_Öl) größer als ein maximaler Grenzwert (GW_7) zuzüglich eines Hysteresewertes ist, oder
c) ein aktivierter Zustand der Bremse erkannt wird, oder
d) ein Drosselklappenwinkel (Dki) größer als ein maximaler Drosselklappenwinkel (Dki_max) zuzüglich eines Hysteresewertes ist, oder
e) ein Drosselklappenwinkel (Dki) kleiner als ein minimaler Drosselklappenwinkel (Dki_min) abzüglich eines Hysteresewertes ist.

4. Verfahren nach Anspruch 1, 2 oder 3, dadurch **gekennzeichnet,** daß in der Unterscheidungsfunktion (S6) das Endekriterium als erfüllt erkannt wird, wenn
a) ein Signal "Normalbetrieb" für die Wandlerkupplung (GWK) erkannt wird, oder
b) ein Signal zur Schaltung in einen nächsten Gang erkannt wird.

5. Verfahren nach einem der Ansprüche 1 bis 4, dadurch **gekennzeichnet,** daß eine Verarbeitungsfunktion (S2) zur Rückkehr in das Hauptprogramm gestartet wird, wenn in der Unterscheidungsfunktion (S1) festgestellt wird, daß kein Anfahrgang geschaltet ist oder die zusätzliche Startbedingung nicht erfüllt ist.

6. Verfahren nach einem der Ansprüche 1 bis 5, dadurch **gekennzeichnet,** daß eine Verarbeitungsfunktion (S5) zur Rückkehr in das Hauptprogramm gestartet wird, wenn in der Unterscheidungsfunktion (S4) festgestellt wird, daß ein Abbruchkriterium erfüllt ist.

7. Verfahren nach einem der Ansprüche 1 bis 6 dadurch **gekennzeichnet,** daß in die Verarbeitungsfunktion (53) zur Schlupfbeeinflussung zurückverzweigt wird, wenn in der Unterscheidungsfunktion (S6) kein Endekriterium erkannt wird.

8. Verfahren nach einem der Ansprüche 1 bis 7, dadurch **gekennzeichnet,** daß eine Verarbeitungsfunktion (S7) zur Rückkehr in das Hauptprogramm aktiviert wird, wenn in der Unterscheidungsfunktion (S6) ein Endekriterium als erfüllt erkannt wird.

## Claims

1. Method for the closed-loop control of a converter clutch, in particular a closed-loop-controlled lock-up clutch (GWK), of an automatic gearbox during a starting process of a vehicle by means of an electronic gear open-loop control device (EGS) having computation unit and of an electrical pressure adjuster (EDS), characterized in that a processing function (S3) for slip modification during the starting process is started if it is found in a first decision function (S1) that a start-up gear has been selected and an additional, predefined starting condition is fulfilled, under which conditions, for the purpose of slip modification, separate closed-loop control parameters and a separate required slip family of characteristics which determines the dependence between required slip (dn_soll), turbine rotary speed (n_T) and engine torque (T_Mot) are used and the processing function (S3) is run until it is found in a decision function (S4) that a specifiable termination criterion is fulfilled, or it is found in a downstream decision function (S6) that a specifiable end criterion is fulfilled.

2. Method according to Claim 1, characterized in that the additional starting condition is recognized as fulfilled in the decision function (S1) if
a) an unactivated state of the brake is recognized and/or
b) a throttle valve angle (Dki) is greater than a minimum throttle valve angle (Dki_min) and smaller than a maximum throttle valve angle (Dki_max) and/or
c) an engine rotational speed (n_Mot) is less than a limit value (GW_1) and/or
d) a throttle valve angle gradient (Dki_gradient) is less than a limit value (GW_2) and/or
e) a value of the oil temperature (ϑ_Öl) is greater than a minimum limit value (GW_3) and/or
f) the value of the oil temperature (ϑ_Öl) is less than a maximum limit value (GW_4) and/or
g) a shut-off time (T_sperr_1) has elapsed since a last activation of the processing function (S3) for the slip modification and/or
h) a shut-off time (T_sperr_2) has elapsed since a limit value (GW_5) for a permissible amount of energy loss (E_Verlust) was exceeded and/or
i) no altitude (x [m] above mean sea level) is detected.

3. Method according to Claim 1 or 2, characterized in that the termination criterion is recognized as fulfilled in the decision function (S4) if
a) an amount of energy loss (E_Verlust) is greater than a specified limit value (GW_6) or
b) a value of the oil temperature (ϑ_Öl) is greater than a maximum limit value (GW_7) including a hysteresis value or
c) an activated state of the brake is recognized or
d) a throttle valve angle (Dki) is greater than a maximum throttle valve angle (Dki_max) including a hysteresis value or
e) a throttle valve angle (Dki) is less than a minimum throttle valve angle (Dki_min) minus a hysteresis value.

4. Method according to Claim 1, 2 or 3, characterized in that the end criterion is recognized as fulfilled in the decision function (S6) if
a) a "normal operation" signal for the controlled lock-up clutch (GWK) is recognized or
b) a signal for selecting an adjacent gear is detected.

5. Method according to one of Claims 1 to 4,
characterized in that a processing function (S2) for the return to the main program is started if it is found in the decision function (S1) that no starting process is selected or the additional starting condition is not fulfilled.

6. Method according to one of Claims 1 to 5,
characterized in that a processing function (S5) for the return to the main program is started if it is found in the decision function (S4) that a termination criterion is fulfilled.

7. Method according to one of Claims 1 to 6,
characterized in that branching back into the processing function (S3) for slip modification is performed if no end criterion is detected in the decision function (S6).

8. Method according to one of Claims 1 to 7,
characterized in that a processing function (S7) for the return to the main program is activated if an end criterion is recognized as fulfilled in the decision function (S6).

## Revendications

1. Procédé pour le réglage d'un convertisseur semi-automatique, notamment un convertisseur d'embrayage de prise directe réglé (GWK) d'une boîte de vitesses automatique lors d'un processus de démarrage d'un véhicule, au moyen d'un appareil de commande à transmission électronique (EGS) avec une unité de calcul et un régulateur de pression électrique (EDS) **caractérisé en ce** qu'une fonction de traitement (S3) pour agir sur le glissement est lancée lors du démarrage si, dans une première fonction de discrimination (S1), il a été détecté qu'une vitesse de démarrage est enclenchée et qu'une condition préliminaire supplémentaire prédéterminée du démarrage est satisfaite, en ce que des paramètres de réglage propres et un champ caractéristique du glissement théorique propre définissant la dépendance entre le glissement de consigne (dn_soll), la vitesse de rotation de la turbine (n_T) et le couple moteur (T_Mot) sont utilisés pour agir sur le glissement et la fonction du traitement (S3) fonctionnant jusqu'à ce que, dans une fonction de discrimination (S4), il est détecté qu'un critère de rupture prédéterminable est satisfait ou que, dans une fonction de discrimination subordonnée (S6), il est détecté qu'un critère prédéterminable est satisfait.

2. Procédé selon la revendication 1, **caractérisé en ce que**, dans la fonction de discrimination (S1), la condition supplémentaire du démarrage est reconnue comme satisfaite si
a) un état non activé du frein est détecté, et/ou
b) un angle de soupape d'étranglement (Dki) est plus grand qu'un angle minimal de soupape d'étranglement (Dki_min) et plus petit qu'un angle maximal de soupape d'étranglement (Dki_max), et/ou
c) une vitesse du moteur (n_Mot) est plus petite qu'une valeur limite (GW_1), et/ou
d) un gradient de l'angle de la soupape d'étranglement (Dki_gradient) est plus petit qu'une valeur limite (GW_2), et/ou
e) une valeur de la température d'huile (θ_Öl) est supérieure à une valeur limite minimale (GW_3), et/ou
f) la valeur de la température d'huile (θ_Öl) est inférieure à une valeur limite maximale (GW_4), et/ou
g) un temps de blocage (T_sperr_1) depuis une dernière activation de la fonction de traitement (S3) pour agir sur le glissement est écoulé, et/ou
h) un temps de blocage (T_sperr_2) depuis un dernier dépassement d'une valeur limite (GW_5) pour une quantité d'énergie excédentaire admissible (E_verlust) est écoulé, et/ou
i) aucune identification de hauteur (x[m] supérieur à NN) n'est constatée.

3. Procédé selon la revendication 1 ou 2, **caractérisé en ce que**, dans la fonction de discrimination (S4), le critère de rupture est reconnu comme satisfait si
a) une quantité d'énergie excédentaire (E_Verlust) est supérieure à une valeur limite prédéfinie (GW_6), ou
b) une valeur de la température d'huile (θ_Öl) est supérieure à une valeur limite maximale (GW_7) additionnée d'une valeur d'hystérésis, ou
c) un état activé du frein est détecté, ou
d) un angle de la soupape d'étranglement (Dki) est supérieur à un angle maximal de la soupape d'étranglement (Dki_max) additionné d'une valeur d'hystérésis, ou
e) un angle de la soupape d'étranglement (Dki) est inférieur à un angle minimal de la soupape d'étranglement (Dki_min) moins une valeur d'hystérésis.

4. Procédé selon la revendication 1, 2 ou **caractérisé en ce que**, dans la fonction de discrimination (S6), le critère de fin est identifié comme satisfait si
a) un signal "fonctionnement normal" est reconnu pour le convertisseur semi-automatique (GWK), ou
b) un signal pour l'engagement de la vitesse suivante est reconnu.

5. Procédé selon l'une des revendications 1 à 4, **caractérisé en ce qu**'une fonction de traitement (S2) pour le retour dans le programme principal est lancée lorsque, dans la fonction de discrimination (S1), il a été détecté qu'aucune vitesse de démarrage n'est engagée ou que la condition supplémentaire de démarrage n'est pas satisfaite.

6. Procédé selon l'une des revendications 1 à 5, **caractérisé en ce qu**'une fonction de traitement (S5) pour le retour dans le programme principal est lancée lorsque, dans la fonction de discrimination (S4), il a été constaté qu'un critère de rupture est satisfait.

7. Procédé selon l'une des revendications 1 à 6, **caractérisé en ce qu**'un réembranchement dans la fonction de traitement (S3) pour influer sur le glissement est effectué lorsque, dans la fonction de discrimination (S6), aucun critère de fin n'est détecté.

8. Procédé selon l'une des revendications 1 à 7, **caractérisé en ce qu**'une fonction de traitement (S7) pour le retour dans le programme principal est activée lorsque, dans la fonction de discrimination (S6), il est reconnu qu'un critère de fin est satisfait.
